# EUROPEAN PATENT APPLICATION

(11) **EP 0 793 042 A1**
(43) Date of publication of application: **03.09.1997**
(21) Application number: 97100107.8
(22) Date of filing: 07.01.1997
(51) Int. Cl.: F16K 31/00, F16K 31/06, G08B 21/00

(54) **Safety valve arrangement**

(30) Priority: 19.02.1996 IL 11718096
(71) Applicant: A.G.S.- Advanced Gas Systems Ltd., Haifa (IL)
(72) Inventor: Amos, Sapir, . (IL)
(74) Representative: Heldt, Gert, Dr. Dipl.-Ing.

(57) **Abstract**

The present invention relates to a safety device especially useful for preventing leakage of flammable or toxic materials. The safety device according to the present invention is comprised of a sensor (2) for sensing unsafe concentrations of said materials or of their byproducts, a safety valve (4) connected to the sensor by a communications linkage (3), and the safety valve is further connected to the said materials passage for closing (or opening) the passage according to predetermined conditions. The safety device is further characterized by automatically or manually closing (or opening) the materials passage upon any communications linkage breakdown.

## Description

### FIELD OF THE INVENTION

The present invention generally relates to a safety valve device where the detection of a problematic situation by a control mechanism initiates a change in a valve status in said safety valve. More specifically the present invention relates to a safety valve device where the interruption of the power supplied via a communications linkage between a sensor and the safety valve initiates a change of a valve status.

### BACKGROUND OF THE INVENTION

Valves are used to regulate the supply of liquids and gases. The liquids or gases may be dangerous substances such as flammable, explosive or toxic materials. Many substance specific detectors exists to detect the leakage of dangerous materials. Other detectors respond to dangerous situations, for example smoke detectors. Such detectors as these are sometimes connected to automatic valve closure mechanisms. This affords adequate protection, except in situations when the detector is inoperative or when the detector is disconnected from the automatic valve closure mechanism. The present invention remedies the dangers imposed by such intermittent situations.

The remedy of the present invention has probably been applied in industrial environments. The present invention differs in two significant respects. First, the present invention is designed mainly for use in domestic environments where pressures and flow rates are significantly lower than those found in industrial environments. Second, the present invention is restricted to the transmission of low power between the detector and the valve closure mechanism, as a safety mechanism. Industrial environments are restricted from the low power consumption mechanism of the present invention, by the very reason of higher pressures and flow rates.

In the domestic environment there exists European Patent No 92112066.3 where a detector is linked to a valve closure mechanism by radio wave. This patent contains three main features which significantly differ from the present invention. First, the European patent does not have the safety checking mechanism of the present invention for detecting an interruption in the communications mechanism, nor is automaticly transmitted a valve moving command given by said interruption. Second, this patent does not supply power to the automatic valve moving mechanism via the communications mechanism. Third, this European patent automaticly re-opens the valve when the detector no longer measures a dangerous concentration of gas in its vicinity. This automatic re-opening of the valve may only serve to restore the dangerous concentration which has disappeared due to the elapsed time since automatic closure. Simple automatic re-opening is not a safe procedure.

The European patent and the present invention significantly differ in the mechanism through which the sensor to safety valve linkage is accomplished. More significantly the present invention offers a logical solution to the problem of sensor ambiguity, and this represents a substantial increase in the degree of safety provided.

### SUMMARY OF THE INVENTION

The present invention relates to a safety device especially useful for preventing leakage of flammable or toxic materials. The safety device according to the present invention is comprised of a sensor for sensing unsafe concentrations of said materials or of their byproducts, a safety valve connected to the sensor by a communications linkage, and the safety valve is further connected to the said material's passage for closing resp. opening the passage according to predetermined conditions. The safety device is further characterized by automatically or manually closing resp. opening the material's passage upon any communications linkage breakdown.

### DETAILED DESCRIPTION OF THE INVENTION

The present invention relates to a safety device especially useful for preventing leakage of flammable or toxic materials. Flammable or toxic materials for example may be butane, methane, propane, benzene, naphtha, kerosene, fuel oil or other liquids/gases which may have an actuated use in the domestic environment. Byproducts of flammable or toxic materials may be carbon-monoxide or smoke.

More specificly the present invention relates to all material's passage conduits where two specific conditions are simultaneously satisfied. First, where a safety valve actuated by a capacitor, which is charged by up to an about 24v electric power source or its equivalent, can be installed for the closing of the conduit. Second, where the automatic logic for moving the safety valve is at least one sensor and a circuit for monitoring the communications linkage from the sensor to the safety valve.

The safety constraint of the present invention, choosing to operate at low voltages or their equivalent, restricts the present invention to domestic situations such as cooking gas pipes or heating oil lines. In fact there are also other situations where installation of a device accordning to the present invention would be beneficial. These include such diverse applications as cars, boats, and even industrial situations.

The common criteria for application of a device according to the present invention are:
(1) A material's passage operating at sufficiently low pressure or at sufficiently low flow rate such that a safety valve actuated according to the low power constraint is sufficient for said passage's closure resp. opening.
(2) The existance of at least one type of sensor which can detect a situation which would warrant the closure resp. opening of said passage.
(3) A communications linkage from the sensor to the safety valve wherein said low power or its equivalent can be transfered.

Thus for the purpose of this invention the domestic environment is any environment where the aforementioned three conditions are met.

The safety valve device according to the present invention is comprised of a sensor for sensing unsafe concentrations of said materials or their byproducts, a safety valve connected to the sensor by a communications linkage, and the safety valve is further connected to the material's passage for closing resp. opening the passage according to predetermined conditions. The safety valve device is characterized by automatically or manually closing resp. opening material's passage not only when the sensor senses leakage but also upon any communications linkage breakdown. In the domestic environment material's passage usually means pipes or tubes, which are commonly fabricated from metal or plastic.

In the preferred embodyment of the present invention the communications linkage is an electric wire pair conducting up to about 24V.

In another preferred embodyment of the present invention the communications linkage is a light source coupled to a photovoltaic cell. In this preferred embodyment the communications linkage is characterized by the cell converting the light into up to about 24V. The linkage is either a directed beam of light in free air or a constrained beam of light. One example of a directed beam of light in free air is a laser beam. One example of a constrained beam of light is light in a fiber optic cable.

In general an embodyment of the present invention requires a communications linkage from the sensor to the safety valve wherein said low power or its equivalent can be transfered. Other examples of such linkage according to preferred embodyments of the present invention include:
(1) The material's passage itself when it can be simultaneously used as a low power conduit. For example using the pipe (through which cooking gas flows and to which the safety valve is attached) as a wave guide for a predetermined frequency.
(2) In place wireing such as telephone wireing or electric wireing when such wire can be used for the simultaneous and unambiguous modulation of the requesite low power communications component of the present invention from the sensor to the safety valve.

The safety valve according to the present invention is comprised of a manual flow/no-flow mechanism and an automatic no-flow mechanism resp. an automatic flow mechnism. In the preferred embodyment of the present invention the automatic no-flow mechanism resp. the automatic flow mechanism is attached to the manual flow/no-flow mechanism. This allows either the safety valve to be re-opened using the manual mechanism after the safety valve has been closed by the automatic mechanism, or in case of another safety valve this one to be re-closed using the manual mechanism after the safety valve has been opened by the automatic mechanism.

The automatic no-flow resp. flow mechnism of the present invention is comprised of a logic circuit connected to the communications linkage and connected to a solenoid, a solenoid, and a bistable latch element actuated by the solenoid for the closing of the material's passage when it was opened in before resp. for opening the material's passage when it was closed in before.

The logic circuit contains a capacitor which is charged by the power flowing on the communications linkage or by power derived thereby, as in the preferred embodyment wherein the communications linkage is a light source coupled to a photo-voltaic cell. The capacitor is discharged when the logic circuit detects a break in the communications linkage, and this causes the closing of the material's passage when it was opened in before resp. opening of the material's passage when it was closed in before.

The bistable latch element may be a two permanent magnet type latch or an unstable spring type latch or similar. In the safety device according to the present invention the sensor continuously sends via the communications linkage either up to about 24V or its equivalent or a beam of light. This continuous sending is interrupted because of the occurance of one of two conditions, either flammable material, toxic material, or their byproducts are detected in unsafe concentrations or during electric supply breakdown. Thereupon transmission via the communications linkage is suspended until both safe detection levels are measured and electric power is restored. Restoration of transmission will not cause a re-opening resp. re-closing of the valve.

This continuous sending via the communications linkage may also be intentionally interrupted as in the cases of a communications linkage test button on the sensor or of a command port on the sensor for accepting a communications interrupt command from an external controller such as a person computer or a fire alarm system.

The sensor according to the present invention may contain multiple sensory elements. For example a sensor may contain a sensory element for detecting methane gas and a second sensory element for detecting smoke. Because the sensor according to the present invention may contain multiple sensory elements and simultaneously may accept communications interrupt commands from one or more external controllers, the specific configuration of a sensor may achieve the appearence of an "intelligent" sensor. Thus the safety valve device according to the present invention using a configured "intelligent" sensor may respond to unsafe concentrations of specific material, unsafe concentrations of byproduct material, other measurable unsafe situations, external shut-dow commands, break in the communications from the sensor to the valve, and electric power outages.

It should be noted that because the present invention respond to breaks in the communications from the sensor to the valve and also to electric power outages, the present invention has a high safety value in natural disasters such as earthquakes. This feature, the high safety value in natural disasters such as earthquakes, is a unique and highly significant feature of the safety valve device according to the present invention. This feature causes the device to respond to signs of the natural disaster before there has been any detection of the leakage of flammable or toxic materials. This feature furthermore is an operative mechanism without any additional logic circuits nor any additional detectors specificly designed, for example for earthquakes.

The sensors used in preferred embodyments of the present invention are powered by 110v AC, 220v AC, or by up to 24v DC.

The present invention will be described by Figures 1-3. These figures are solely intended to illustrate the preferred embodyment of the invention and are not intended to limit the scope of the invention in any manner.
Figure 1 illustrates a schematic diagram of the safety valve device.
Figure 2 illustrates a cross-section of the safety valve, which closes in cases of unsafe concentrations,
Figure 3 illustrates a cross-section of another preferred embodyment of the safety valve which closes in cases of unsafe concentrations
Figure 4 illustrates a cross-section of another preferred embodyment of the safety valve which opens in cases of unsafe concentrations
Figure 5 illustrates a cross-section of another preferred embodyment of the safety valve which opens in cases of unsafe concentrations

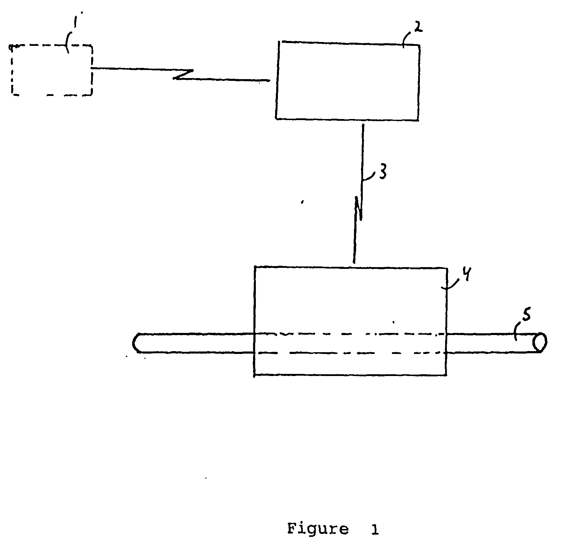

Figure 1 illustrates a schematic diagram of the safety valve device. A standard 220v elecric power source (1) is connected to a sensor (2) for the sensing of unsafe concentrations of a specific material. The sensor continously sends about 24v over a communications linkage (3). The sending of about 24v is suspended either when connection to the 220v electric power source is interruped or when the sensor senses the unsafe concentration. The safety valve (4) monitors the communications linkage. When about 24v is being received, the safety valve charges or maintains the charge of its capacitor. When the safety valve detects a break in the reception of the about 24v, then the capacitor is discharged into a solenoid which causes an inversion in the status of an internal bi-stable latch element which in turn causes the closing of the attached material's passage (5).

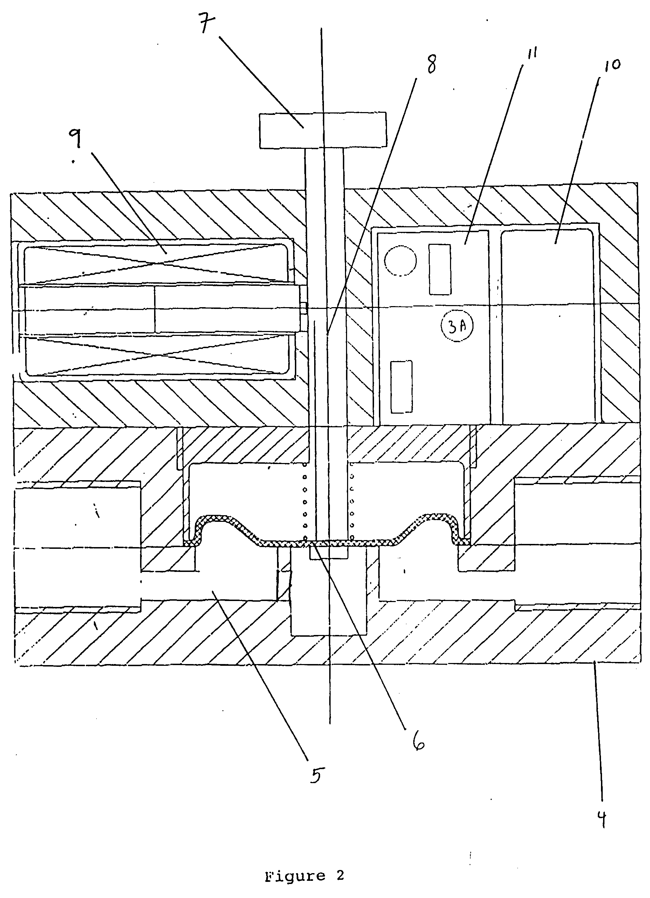

Figure 2 illustrates a cross-section of the safety valve. The safety valve (4) is connected to a material's passage (5) which is shown here in a no-flow condition due to the interposition of the safety valve's diaphragm (6) which has closed off the material's passage. The diaphragm can be reset to the flow status position by manually pulling on the attached plunger handle (7). This pulling also resets the bistable latch element (8). This would allow the bistable latch element to again be triggered by a solenoid coil (9) which receives power from the discharge of a capacitor (10). An electronic board/circuit (11) connected to the communications linkage (3A) receives up to 24v on said linkage and uses this power to charge the capacitor and to maintain the charge therein. The electronic board/circuit also monitors the power received on the communications linkage and when a break in the flow of said power is observed, then the electronic board/circuit initiates the rapid discharge of the capacitor into the solenoid coil which in turn triggers the bi-stable latch element thus causing the diaphragm to close the material's passage. In this preferred embodyment the solenoid is oriented perpendicular to the axis of the bi-stable latch element.

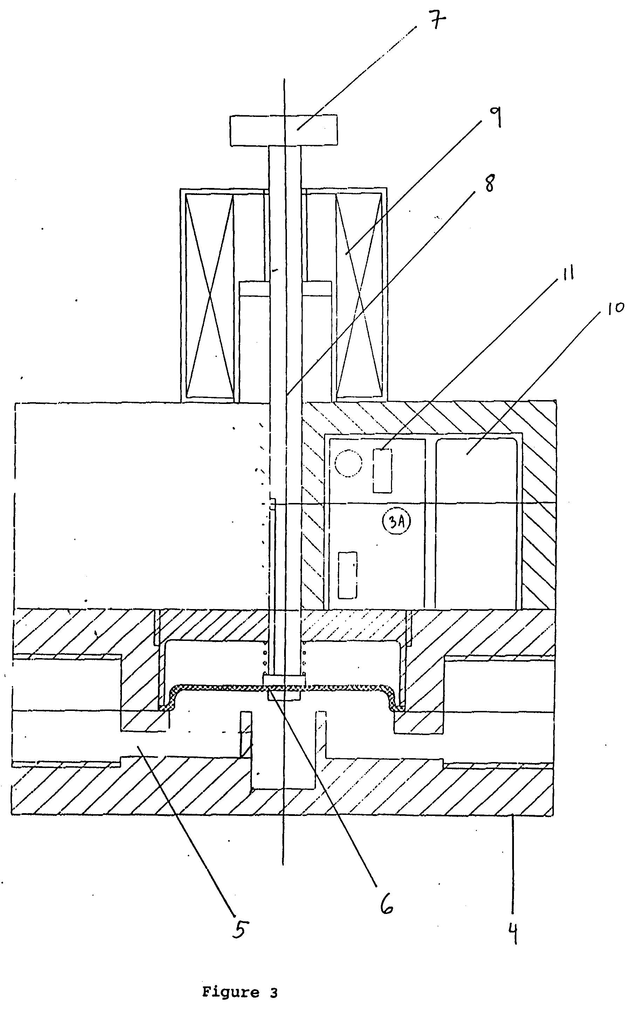

Figure 3 illustrates a cross-section of another preferred embodyment of the safety valve (4) is connected to a material's passage (5) which is shown here in a flow condition due to the non-interposition of the safety valve's diaphragm (6) which can close off the material's passage. The diaphragm can be reset to the no-flow status position by manually pushing on the attached plunger handle (7) or by the triggering of the bistable latch element (8) by solenoid coil (9) which receives power from the discharge of a capacitor (10). An electronic board/circuit (11) connected to the communications linkage (3A) receives up to 24v on said linkage and uses this power to charge the capacitor and to maintain the charge therein. The electronic board/circuit also monitors the power received on the communications linkage and when a break in the flow of said power is observed, then the electronic board/circuit initiates the rapid discharge of the capacitor into the solenoid coil which in turn triggers the bi-stable latch element thus causing the diaphragm to close the material's passage. In this preferred embodyment the solenoid is oriented parallel to the axis of the bi-stable latch element.

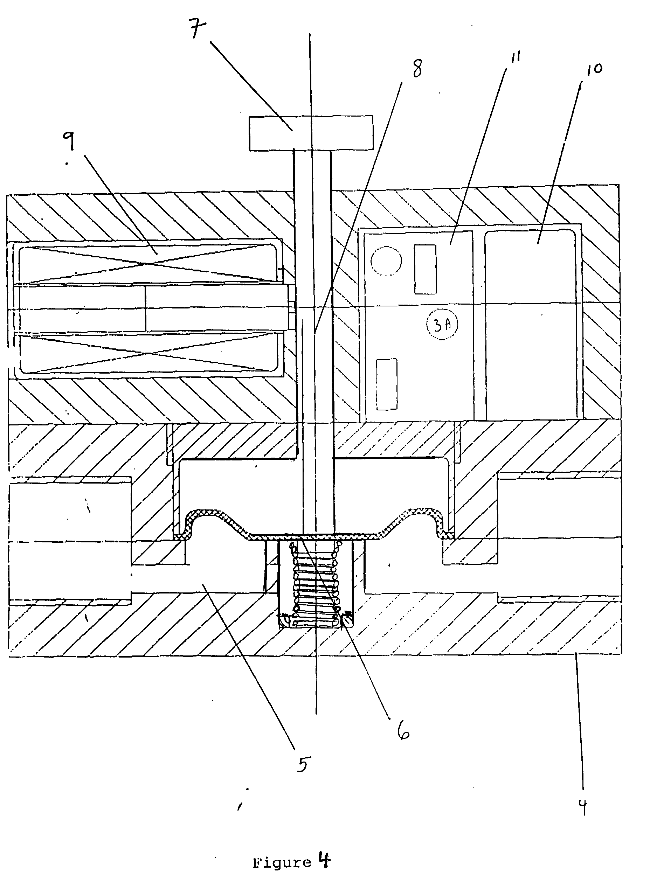

Figure 4 illustrates a cross-section of the safety valve (4). The safety valve (4) is connected to a material's passage (5) which is shown here in a no-flow condition due to the interposition of the safety valves diaphragm (6) which has closed off the material's passage. The diaphragm (6) can be reset to the flow status position by manually pulling on the attaches plunger handle (7). This pulling also resets the bistable latch element (8). This would allow the bistable latch element (8) to again be triggered by a solenoid coil (9) which receives power from the discharge of a capacitor (10). An electronic board/curcuit (11) connected to the communications linkage (3A) receives up to 24V on said linkage and uses this power to charge the capacitor and to maintain the charge therein. The electronic board/circuit (11) also monitors the power received on the communications linkage and when a break in the flow of said power is observed, than the electronic board/circuit (11) initiates the rapid discharge of the capacitor (10) into the solenoid coil (9) which in turn triggers the bistable latch element (8) thus causing the diaphragm (6) to open the material's passage (5). In this preferred embodyment the solenoid (9) is oriented perpendicular to the axis of the bistable latch element (8). After opening the material's passage (5) the material, for example extinguisher water is allowed to run to a fire extinguisher.

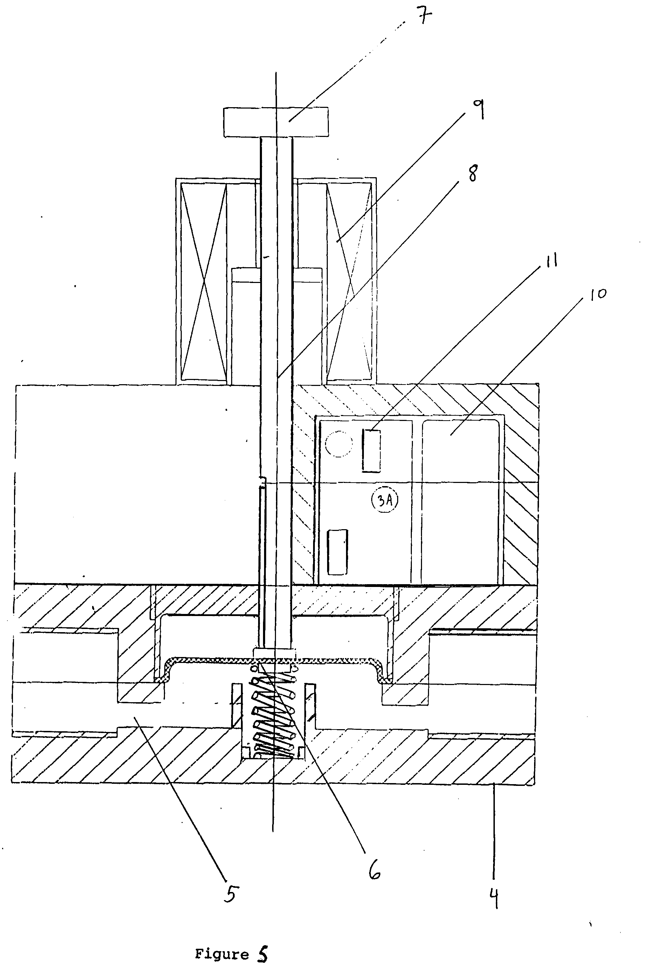

Figure 5 illustrates a cross-section of another preferred embodyment of the safety valve according to the present invention. The safety valve (4) is connected to a material's passage (5) which is shown here in a flow condition due to the non-interposition of the safety valve's diaphragm (6) which can close off the material's passage. The diaphragm can be reset to the non-flow status position by manually pushing on the attached plunger handle (7) or by the triggering of the bistable latch element (8) by solenoid coil (9) which receives power from the discharge of a capacitor (10). An electronic board/circuit (11) connected to the communications linkage (3A) receives up to 24V on said linkage and uses this power to charge the capacitor (10) and to maintain the charge therein. The electronic board/circuit (11) also monitors the power received on the communications linkage and when a break in the flow of said power is observed, then the electronic board/circuit (11) initiates the rapid discharge of the capacitor (10) into the solenoid coil (9) which in turn triggers the bistable latch element (8) thus causing the diaphragm (6) to open the material's passage (5). In this preferred embodyment the solenoid (9) is oriented parallel to the axis of the bi-stable latch element (8) in open position of the diaphragm (6) the material for example extinguisher water is allowed to run through the material's passage (5) in direction to fire extinguisher.

## Claims

1. A safety valve device especially useful for preventing leakage of flammable or toxic materials resp. controlling emergency material comprising a sensor for sensing unsafe concentrations of gases or of their byproducts, a safety valve connected to the said sensor by a communications linkage, and the safety valve is further connected to a material's passage for controlling the said passage according to predetermined conditions, and the said safety device is characterized by also automatically or manually controlling the said material's passage upon any communications linkage breakdown.

2. A safety valve device according to claim 1 wherein the safety valve is comprised of a manual flow/no-flow mechanism and an automatic no-flow mechanism.

3. A safety valve device according to claim 1 wherein the safety valve is comprised of a manual flow/no-flow mechanism and an automatic flow mechanism.

4. A safety valve device according to claim 1 and 2 wherein the automatic no-flow mechanism is comprised of a logic circuit connected to said communications linkage and connected to a solenoid, a solenoid, and a bi-stable latch element actuated by said solenoid for the closing of said passage.

5. A safety valve device according to claim 1 and 3 wherein the automatic flow mechanism is comprised of a logic circuit connected to said communications linkage and connected to a solenoid, a solenoid, and a bi-stable latch element actuated by said solenoid for the opening of said passage.

6. A safety valve device according to claim 4 wherein said logic circuit contains a capacitor which is charged by the power flowing on the communications linkage or by power derived thereby and said capacitor is discharged when the logic circuit detects a break in the communications linkage, closing said passage.

7. A safety valve device according to claim 5 wherein said logic circuit contains a capacitor which is charged by the power flowing on the communications linkage or by power derived thereby and said capacitor is discharged when the logic circuit detects a break in the communications linkage, opening said passage.

8. A safety valve device according to claim 1 wherein said communications linkage is an electric wire pair conducting up to about 24V.

9. A safety valve device according to claim 1 wherein said communications linkage is a light source coupled to a photovoltaic cell characterized by said cell converting said light into up to about 24V and the said linkage being a directed beam of light in free air such as a laser beam or a constrained beam of light such as light in a fiber optic cable.

10. A safety valve device according to claim 1, 4 or 5 wherein the bi-stable latch element is selected from a two permanent magnet type latch or an unstable spring type latch or similar.

11. A safety valve device according to claim 1 wherein flammable or toxic material are selcted from butane, methane, propane, benzene, naphtha, kerosene, of fuel oil.

12. A safety valve device according to claim 1, wherein emergency materials are selected from extinguisher materials, water, gases sands.

13. A safety valve device according to claim 1 wherein byproducts of flammable or toxic material are selected from carbon-monoxide or smoke.

14. A safety valve device according to claim 1 wherein the sensor continuously sends either up to about 24V or a beam of light via the communications linkage unless either flammable or toxic material, smoke, vapour or steam is detected in unsafe concentrations or during electric supply breakdown, and thereupon transmission via the communications linkage is suspended.

15. A safety valve device substantially as described and illustrated hereinbefore.
